(19) Europäisches Patentamt
European Patent Office
Office européen des brevets

(11) **EP 2 584 055 B1**

(12) **EUROPEAN PATENT SPECIFICATION**

(45) Date of publication and mention
of the grant of the patent:
**30.11.2016 Bulletin 2016/48**

(21) Application number: **11798138.1**

(22) Date of filing: **21.06.2011**

(51) Int Cl.:
*C22B 23/00* (2006.01)   *C25C 1/08* (2006.01)
*C25C 7/06* (2006.01)   *C22B 3/04* (2006.01)
*C22B 3/44* (2006.01)   *C22B 15/00* (2006.01)

(86) International application number:
**PCT/JP2011/064156**

(87) International publication number:
**WO 2011/162254 (29.12.2011 Gazette 2011/52)**

(54) **METHOD FOR REMOVAL OF COPPER IONS FROM COPPER-CONTAINING NICKEL CHLORIDE SOLUTION, AND PROCESS FOR PRODUCTION OF ELECTROLYTIC NICKEL**

VERFAHREN ZUR ENTFERNUNG VON KUPFERIONEN AUS EINER KUPFERHALTIGEN NICKELCHLORIDLÖSUNG UND VERFAHREN ZUR HERSTELLUNG EINES ELEKTROLYTNICKELS

PROCÉDÉ D'ÉLIMINATION D'IONS CUIVRE D'UNE SOLUTION DE CHLORURE DE NICKEL CONTENANT DU CUIVRE, ET PROCESSUS DE PRODUCTION DE NICKEL ÉLECTROLYTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2010   JP 2010284956**
**21.06.2010   JP 2010140506**

(43) Date of publication of application:
**24.04.2013   Bulletin 2013/17**

(73) Proprietor: **Sumitomo Metal Mining Co., Ltd.**
**Tokyo 105-8716 (JP)**

(72) Inventors:
• **KAKIMOTO, Minoru**
**Niihama-shi**
**Ehime 792-0011 (JP)**
• **TAKAISHI, Kazuyuki**
**Niihama-shi**
**Ehime 792-0011 (JP)**
• **MATSUMOTO, Nobuhiro**
**Niihama-shi**
**Ehime 792-0011 (JP)**

(74) Representative: **Müller-Boré & Partner**
**Patentanwälte PartG mbB**
**Friedenheimer Brücke 21**
**80639 München (DE)**

(56) References cited:
**EP-A1- 0 248 518      JP-A- 2 145 731**
**JP-A- 7 300 691        JP-A- H1 180 986**
**JP-A- 2007 191 769**

**Description**

Field of the Invention

The present invention relates to a method of removing copper ions from a copper containing nickel chloride solution for use in, for example, an electro-nickel producing process and to a method of producing electro-nickel.

Background of the Invention

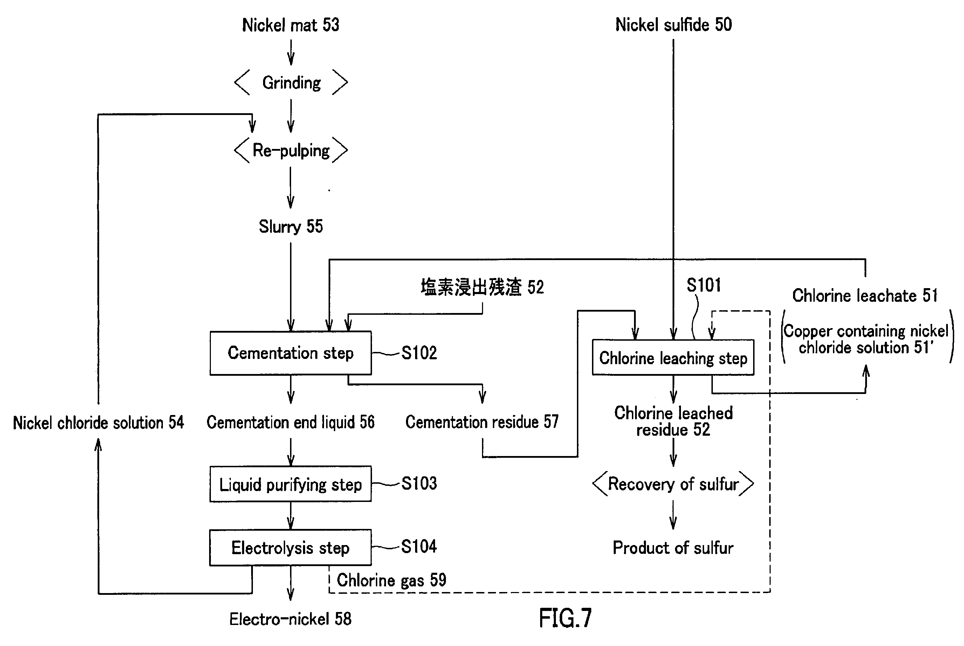

Using a wet process for nonmetals, most of metals including nickel, cobalt, copper, and so on are purged out by chlorine leaching from a material which is namely a nickel sulfide, a mixture of nickel, cobalt, and other metals, produced by sulfuric leaching from a low quality laterite ore and a nickel mat prepared by wet processing.
Then, a resultant solution produced by the chlorine leaching is treated from which metallic impurities are removed and subjected to electrolytic sampling for production of electro-nickel. More particularly, Fig. 7 illustrates a procedure of steps of the electro-nickel producing process using chlorine leaching.

As shown in Fig. 7, the electro-nickel producing process comprises a chlorine leaching step S101, a cementation step S102, a liquid purifying step S103, and an electrolysis step S104.

In the chlorine leaching step S101, nickel oxide ore, for example, is subjected to wet process for producing a nickel sulfide 50 which is used as a material and the material is subjected to oxidation leaching of metallic components including nickel and copper with the use of a chlorine gas 59 thus for producing a copper containing nickel chloride solution 51' as the chlorine leachate 51. The chlorine leachate 51 (the copper containing nickel chloride solution 51') produced in the chlorine leaching step S101 and containing copper is then transferred to the cementation step S102. On the other hand, a resultant impurity product of which the main component is sulfur as remains at solid phase after the chlorine leaching step S101 is released as a chlorine leached residue 52 and recovered as a product of sulfur.

In the cementation step S102, the copper containing nickel chloride solution 51' produced in the chlorine leaching step S101 is received and treated in which copper in the copper containing nickel chloride solution 51' is solidified and removed. More specifically, the cementation step S102 mixes the copper containing nickel chloride solution 51' with a slurry 55 which has been pulped with a nickel chloride solution 54 produced by grinding and treating a nickel mat 53 with the use of, for example, dry process and subjected to an action of the electrolysis step S104 which will be described later. Also, in the cementation step S102, the chlorine leached residue 52 composed mainly of sulfur produced as a sub-product in the chlorine leaching step S101 is added.

In the cementation step S102, bivalent copper ions in the copper containing nickel chloride solution 51' are reduced to univalent copper ions by the reducing action of nickel metals and nickelous sulfide in the nickel mat 53 and then, the univalent copper ions are solidified by the action of sulfur in the chlorine leached residue 52 to produce a copper sulfide so that copper in the copper containing nickel chloride solution 51' can be removed out.

In the cementation step S102, the solution after the solidification and removal of copper contains nickel in the form of bivalent nickel ions and is then transferred as a cementation end liquid 56 to the liquid purifying step S103. On the other hand, a residue at solid phase containing sulfide of copper and non-reacted nickel after the solidification is returned back as a cementation residue 57 to the chlorine leaching step S101. Also, a non-reacted component of cobalt and copper in the nickel mat 53 like non-reacted nickel is returned back as the cementation residue 57 to the chlorine leaching step S101 while the metallic ions are transferred as the cementation end liquid 56 to the liquid purifying step S103.

In the liquid purifying step S103, the cementation end liquid 56 is received from the cementation step S102 and subjected to its action where impurities including iron, cobalt, copper, etc., other than nickel, are removed from the cementation end liquid 56 by a purifying process such as oxidation neutralizing technique. More particularly, the purifying step S103 includes substantially an iron removing step, a cobalt removing step, a lead removing step, and a zinc removing step.

In the electrolysis step S104, the nickel chloride solution received through the purifying step S103 is subjected to electrolytic sampling for producing an electro-nickel 58. In the electrolysis step S104, nickel ions in the nickel chloride solution are deposited as a metal or a product of electro-nickel on the cathode. Also, on the anode, chlorine ions in the nickel chloride solution are turned to a chlorine gas 59 which is then utilized in the chlorine leaching step S101 or the like.

As described, it is essential for producing an electro-nickel 58 of higher quality in the electro-nickel producing process where the copper containing nickel chloride solution 51' is produced from the material of nickel sulfide 50 by chlorine leaching and the electro-nickel 58 is produced from the copper containing nickel chloride solution 51' that the cementation process for solidification and removal of copper in the copper containing nickel chloride solution 51' is conducted at higher efficiency. A technique related to the cementation process is proposed as disclosed in, for example, Patent Literature 1.

Meanwhile, as described previously, copper contained in the nickel sulfide 50 is transferred, in the form of the chlorine leached liquid 51 (the copper containing nickel chloride solution 51') produced in the chlorine leaching step S101, to the cementation step S102 where it is solidified for removal. The cementation residue 57 contains a solidified copper and is returned back to the chlorine leaching step S101 where univalent copper ions in the solution are converted to bivalent copper ions by the reaction with the chlorine gas and the oxidizing action of the bivalent copper ions promotes the leaching of nickel. More particularly, between the chlorine leaching step S101 and the cementation step S102, copper while remaining at a degree of concentration (commonly 40 g/l to 60 k/l) is circulated. Accordingly, when the processing amount of the nickel sulfide 50 produced by wet process, for example, is increased for raising the production of electro-nickel 58, the amount of copper circulated in the system of the electro-nickel producing process will duly increase.

In the cementation step S102, as described above, the bivalent copper ions contained in the copper containing nickel chloride solution 51' are reduced to the univalent copper ions by the action of the nickel mat 53 supplied additionally as the material and solidified by the action of sulfur in the chlorine leached residue 52. However, since the nickel metals and the nickelous sulfide mainly forming the nickel mat 53 give priority to the reduction from the bivalent copper ions to the univalent copper ions, the univalent copper ions produced from a remaining of nickel metals are solidified to a form of copper sulfide. Consequently, when the amount of copper circulated in the system of the electro-nickel producing process is increased, the amount of the nickel mat used for solidifying to the sulfide after the reduction from the bivalent copper ions to the univalent copper ions will relatively decrease, hence hardly permitting the copper contained in the copper containing nickel chloride solution 51' to be solidified and removed with certainty and efficiency.

Moreover, when the amount of copper circulated in the process system is increased in response to the increase in the amount of the nickel sulfide 50 to be processed for raising the production of the electro-nickel 58, the removal of copper from the copper containing nickel chloride solution 51' will be declined in effectiveness with the amount of the nickel mat 53 remaining unchanged from a conventional supply. As a result, the amount of the nickel mat has to be increased, otherwise the removal of copper with certainty and efficiency will be highly difficult.

For compensation, it is desired that the cementation process is improved for enabling the removal with certainty and efficiency of copper from the copper containing nickel chloride solution 51' when the amount of copper circulated in the process system is increased.

Literature of Prior Art

Patent Literature

Patent Literature 1: JP-A-11-080986

Disclosure of the Invention

Object of the Invention

The present invention has been developed in view of the above aspects and its object is to provide a copper ion removing method for a nickel chloride solution where, in an electro-nickel producing process, for example, the removal of copper contained in a copper containing nickel chloride solution can be accomplished efficiently and effectively and to provide an electro-nickel producing method. Means for solving the Problems

We, the inventors, has studies enthusiastically and repeatedly for achievement of the foregoing object and resultantly found that the removal of copper can be accomplished efficiently and effectively by adding the copper containing nickel chloride solution with a nickel sulfide for reduction of copper and then adding the same with a nickel mat and a chlorine leached residue for solidification as completed the present invention.

More specifically, the copper ion removing method for a nickel chloride solution according to the present invention is characterized, in the form of a copper ion removing method of removing copper ions from a copper containing nickel chloride solution which has been produced by chlorine leaching of a nickel sulfide, comprising a first step of adding the copper containing nickel chloride solution with a nickel sulfide for reduction of, at least, bivalent copper ions in the copper containing nickel chloride solution to univalent copper ions, and a second step of adding a slurry produced by the first step with a nickel mat and a residue produced by the chlorine leaching for solidification of the univalent copper ions in the slurry to form a sulfide.

The residue produced by the chlorine leaching is used as a sulfur source and the solidification of the univalent copper ions to a sulfide is conducted with the use of the sulfur source. Preferably, the nickel sulfide is produced by a wet process of nickel oxide ores and contains nickel and cobalt.

Also, the reactive temperature in the first step is preferably 80 to 110°C and more preferably 90 to 100°C. The reactive temperature in the second step is preferably 70 to 100°C.

The nickel sulfide to be added in the first step is prepared preferably by wet grinding so that the average particle diameter (D50) is not greater than 80 $\mu$m and more preferably by wet grinding to not greater than 20 $\mu$m.

The electro-nickel producing method according to the present invention is characterized, in the form of an electro-nickel producing method of producing an electro-nickel through electrolytic sampling where amounts of copper have been removed from a copper containing nickel chloride solution produced by chlorine leaching of a nickel sulfide, comprising a first cementation step of adding the copper containing nickel chloride solution with a nickel sulfide for reduction of, at least, bivalent copper ions in the copper containing nickel chloride solution to univalent copper ions, and a second cementation step of adding a slurry produced by the first cementation step with a nickel mat and a residue produced by the chlorine leaching for solidification of the univalent copper ions in the slurry to form a sulfide.

Advantage of the Invention

According to the present invention, copper ions contained in the copper containing nickel chloride solution are reduced with the use of a nickel sulfide and then added with a nickel mat and a chlorine leached residue for solidification of the copper ions, whereby the removal of copper contained in the copper containing nickel chloride solution can be accomplished efficiently and effectively.

Brief Description of the Drawings

Fig. 1 is a step diagram of an electro-nickel producing process with chlorine leaching to which the copper ion removing method of the embodiment is applied;
Fig. 2 is a graph showing the relation of the concentration of Cu to the reaction time when the feed of materials in the cementation step is varied;
Fig. 3 is a graph showing profiles of the removal of copper with a change in the temperature in the first cementation step;
Fig. 4 is a graph showing profiles of the removal of copper with a change in the temperature in the second cementation step;
Fig. 5 is a graph showing a profile of the concentration of copper in the first cementation step and the second cementation step separately;
Fig. 6 is a graph showing the relation of the concentration of copper to the particle diameter of a nickel (Ni) sulfide to be added in the first cementation step; and
Fig. 7 is a step diagram of a conventional electro-nickel producing process with chlorine leaching.

Best Modes for embodying the Invention

The copper ion removing method for a nickel chloride solution according to an embodiment of the present invention will be described in more detail, in the form of an example of the copper ion removing method for a nickel chloride solution applied to an electro-nickel producing process, referring to the relevant drawings.
The copper ion removing method of the embodiment is designed for solidifying and removing, with efficiency and effectiveness, copper ions contained in a copper containing nickel chloride solution which is produced by chlorine leaching of a metal sulfide, such as nickel sulfide, containing copper. More specifically, the method includes a first step of adding the nickel chloride solution containing bivalent copper ions (referred to as a copper containing nickel chloride solution hereinafter) with a nickel sulfide to reduce at least bivalent copper ions to univalent copper ions and a second step of adding a resultant slurry produced in the first step with a nickel mat and a chlorine leached residue to solidify the univalent copper ions contained in the slurry to produce a sulfide.

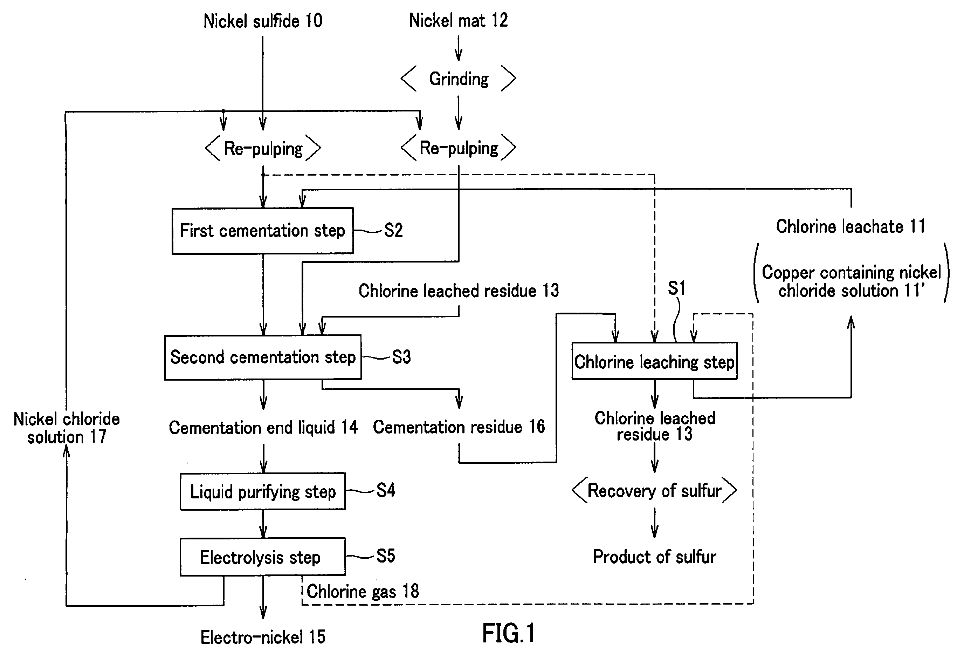

Fig. 1 illustrates a diagram of steps of the electro-nickel producing process applied to the copper ions removing method of the embodiment. As shown in Fig. 1, the electro-nickel producing process comprises a chlorine leaching step S1 of subjecting a nickel sulfide 10 as the material to chlorine leaching of a metal such as nickel for producing a copper containing nickel chloride solution 11 which is a chlorine leachate, a first cementation step S2 of adding the nickel sulfide 10 to the copper containing nickel chloride solution 11' produced in the chlorine leaching step S2 thus to reduce at least bivalent copper ions to univalent copper ions, a second cementation step S3 of adding a nickel mat 12 and a chlorine leached residue 13 to a slurry produced in the first cementation step S2 thus to solidify the univalent copper ions, a liquid purifying step S4 of removing any other impurities than nickel from a cementation end liquid 14, and an electrolysis step S5 of subjecting the nickel chloride solution produced in the liquid purifying step S4 to electrolytic sampling for production of an electro-nickel 15. The steps will then be described in the order.

<Chlorine Leaching Step>

In the chlorine leaching step S 1, a metal sulfide containing copper such as in the form of a nickel sulfide 10 produced from nickel oxide ores by wet process is used as the material to leach a metal such as nickel with the help of chlorine. More particularly, using a chlorine gas 18 which has been recovered in the electrolysis step S5 together with the cementation residue 16 after the second cementation step S3, described later, the leaching of nickel from the nickel sulfide 10 of a metal sulfide material is conducted to produce the copper containing nickel chloride solution 11' which is a chlorine leachate 11. The nickel sulfide 10 of a metal sulfide material is provided in the form of a slurry which has been re-pulped with the nickel chloride solution 17 produced in the electrolysis step S5.

The reactions are executed in the chlorine leaching step S1 as represented by the following expressions (1) to (3).

$$Cl_2 + 2Cu^+ \rightarrow 2Cl^- + 2Cu^{2+} \qquad ...(1)$$

$$NiS + 2Cu^{2+} \rightarrow Ni^{2+} + S^0 + 2Cu^+ \quad ...(2)$$

$$Cu_2S + 2Cu^{2+} \rightarrow 4Cu^+ + S^0 \qquad ...(3)$$

More particularly, in the chlorine leaching step S 1, when the nickel sulfide 10 of the material has been received, its metallic component including nickel sulfide and copper sulfide is leached out by oxidation leaching with the help of bivalent copper ions oxidized by the chlorine gas 18 and obtained as the copper containing nickel chloride solution 11' of a chlorine leachate 11. The chlorine leachate 11 produced in the chlorine leaching step S1 is then transferred to the first cementation step S2 and the second cementation step S3 where copper is solidified and removed, which will be described later. Also, the chlorine leaching step S 1 produces the chlorine leached residue 13 which is left at solid phase and contains mainly sulfur.

<First Cementation Step>

In the first cementation step S2, the copper containing nickel chloride solution 11' of the chlorine leachate 11 produced in the chlorine leaching step S1 is received and added with the nickel sulfide 10 of the material. Thus results substantially in the reduction of bivalent copper ions in the copper containing nickel chloride solution 11' to univalent copper ions.

The nickel sulfide 10 to be added in the first cementation step S2 is provided in the form of a slurry which has been re-pulped together with the nickel chloride solution 17 produced in the succeeding step in the electro-nickel producing process.

The nickel sulfide 10 may be a nickel sulfide produced from, for example, a nickel oxide ores by wet process as is equal to the material used in the chlorine leaching step S 1.

In more detail, the reactions are executed in the first cementation step S2 as represented by the following expressions (4) and (5).

$$4NiS + 2Cu^{2+} \rightarrow Ni^{2+} + Ni_3S_4 + 2Cu^+ \quad ...(4)$$

$$NiS + 2Cu^+ \rightarrow Ni^{2+} + Cu_2S \quad ...(5)$$

More specifically, when the copper containing nickel chloride solution 11' received from the chlorine leaching step S1 has been added with the nickel sulfide 10, the reduction of bivalent copper ions in the copper containing nickel chloride solution 11' to univalent copper ions (represented by the above expression (4)), is promoted by nickel sulfide (NiS), a main substance in the nickel sulfide 10. Also, the substance of NiS acts to solidify the univalent copper ions to copper sulfide ($Cu_2S$) (See the above expression (5)).

However, as the reducing action of NiS, a main substance in the nickel sulfide 10, is not high, the effect of solidifying the univalent copper ions to copper sulfide remains low. Therefore, in the first cementation step S2, the reduction of bivalent copper ions in the copper containing nickel chloride solution 11' to univalent copper ions (represented by the above expression (4)) is mostly proceeded. A reduced form of the univalent copper ions is then solidified to copper sulfide with the help of a sulfur source in the second cementation step S3 (as will be described later in more detail).

It is however preferable in the first cementation step S2 that the solidification of the univalent copper ions to a sulfide such as copper sulfide as represented by the expression (5). More preferably, a reduced form of the univalent copper ions is converted from the bivalent copper ions by the addition of the nickel sulfide 10 and solidified to a sulfide so that the concentration of copper (calculated in univalent form) contained in the copper containing nickel chloride solution 11' is not higher than 30 g/L at the end of the reaction in the first cementation step S2. When the concentration of copper in the end liquid after the first cementation step S2 is 30 g/L, the removal of copper can effectively be carried out by the action of the succeeding second cementation step S3 until the concentration of copper in the copper containing nickel chloride solution 11' drops down to not higher than 0.1 g/L. The sulfide such as copper sulfide produced in the first cementation step S2 is returned back as a cementation residue 16 from the second cementation step S3 to the chlorine leaching step S 1.

Both the copper containing nickel chloride solution 11' used in the firs cementation step S2 and the chlorine leachate 11 received from the chlorine leaching step S1 are not limitative but may be selected from any applicable compositions. For example, a composition may include nickel of 150 to 270 g/L in the concentration and copper of 20 to 40 g/L in the concentration at a pH scale of 0.5 to 2.0. Also, the copper containing nickel chloride solution 11' may be used where the copper ions are present with the rate of bivalent ions being 60 to 90 % and the rate of univalent ions being 10 to 40 %.

The nickel sulfide 10 used as a material in the first cementation step S2 may be produced by wet processing, for example, a low quality nickel oxide ore, as described above, hence containing nickel and cobalt. Since the nickel sulfide 10 produced by wet process of a nickel oxide ore is added as a material to the copper containing nickel chloride solution 11', the reducing power of nickel sulfide and cobalt sulfide contained in the nickel sulfide material enables to efficiently reduce the bivalent copper ions to the univalent copper ions.

The concentration of the nickel sulfide 10 to be added as a material may preferably be 60 to 110 g/L. When the concentration at the addition is lower than 60 g/L, the reduction of the bivalent copper ions to the univalent copper ions will be conducted insufficiently, thus resulting in the removal of copper with less efficiency. On the contrary, when the concentration at the addition is higher than 110 g/L, the reduction will be carried out with less effectiveness, hence resulting in the overall operation with lower efficiency.

In addition, the nickel sulfide 10 may preferably be produced by wet grinding process with the use of, for example, a tower mill or a beads mill. More particularly, the wet grinding process may be executed so that the average diameter (D50) of resultant particles is preferably not greater than 80 $\mu$m and more preferably not greater than 10 $\mu$m. Accordingly, the univalent copper ions contained in the copper containing nickel chloride solution 11' can efficiently be reduced, thus improving the efficiency of the removal of copper ions. In particular, when the average diameter (D50) of the resultant particles is not greater than 20 $\mu$m and preferably not greater than 10 $\mu$m, the concentration of copper (calculated in univalent form) in the copper containing nickel chloride solution 11' is as small as not higher than 30 g/L and thus, the removal of copper can effectively be carried out so that the concentration of copper in the copper containing nickel chloride solution 11' after the second cementation step S3 drops down to not higher than 0.1 g/L. The average diameter (D50) of the resultant particles is equivalent to 50 % of the accumulated volume measured by a laser particle distribution measuring technique.

For the temperature condition in the first cementation step S2, the temperature may preferably be 80 to 110°C and more preferably 90 to 95°C. When the temperature is 80°C or higher, the reduction of copper ions in the copper containing nickel chloride solution 11' can efficiently be carried out and the removal of copper ions in the second cementation step S3, described later, can be improved in the efficiency. If the temperature is higher than 110°C, the removal of copper can be improved in the efficiency but the cost of the overall facilities due to the requirement of heat-resistance properties and the cost of the operation due to the increase in the supply of steam will be increased thus resulting in the operation at lower efficiency.

<Second Cementation Step>

In the second cementation step S3, the slurry containing the copper containing nickel chloride solution 11' produced in the first cementation step S2 is added with the nickel mat 12 and the chlorine leached residue 13 thus to reduced the bivalent copper ions to the univalent copper ions and solidify the univalent copper ions to a sulfide such as copper sulfide. The nickel mat 12 is subjected to grinding and re-pulped to a slurry by the action of the nickel chloride solution 17 produced in the electrolysis step S5 at the later stage, before received and added.

In more detail, the reactions is conducted in the second cementation step S3 as represented by the following expressions (6) to (9).

$$\mathrm{Ni+Cu^{2+} \rightarrow Ni^{2+} +Cu^{+}} \quad ...(6)$$

$$Ni_3S_2+2Cu^{2+} \rightarrow Ni^{2+}+2NiS+2Cu^+ \quad ...(7)$$

$$Ni+2Cu^++S \rightarrow Ni^{2+}+Cu_2S \quad ...(8)$$

$$Ni_3S_2+2Cu^++S \rightarrow Ni^{2+}+2NiS+Cu_2S \quad ...(9)$$

In the second cementation step S3, as shown in the above expressions (6) and (7), the bivalent copper ions remaining in the copper containing nickel chloride solution 11' is reduced to the univalent copper ions by the action of nickel metals (Ni) and nickelous sulfide ($Ni_3S_2$) which both are contained in the nickel mat 12 having been added. As understood, the remaining of the bivalent copper ions not reduced in the fist cementation step S2 is reduced by the action of the nickel mat in the second cementation step S3.

Also, in the second cementation step s3, the action of solidifying the univalent copper ions reduced in both the first cementation step S2 and the second cementation step S3 to produce a form of sulfide is conducted using Ni and $Ni_3S_2$ contained in the nickel mat 12 together with the chlorine leached residue 13 added as a sulfur source (as shown in the expressions (8) and (9)). Consequently, the copper contained in the copper containing nickel chloride solution 11' can be solidified and removed out.

The nickel mat 12 to be added in the second cementation step S3 may be a nickel mat produced by, for example, a dry process and used for reduction of the bivalent copper ions to the univalent copper ions with the reducing power of nickel metals and nickelous sulfide which are main components of the mat. On the other hand, the nickel metals and the like in the nickel mat 12 are leached by the oxidizing power of the bivalent copper ions thus to produce nickel ions.

Moreover, the chlorine leached residue 13 to be added in the second cementation step S3 may be a residue left at solid phase as a sub product after the reaction of the chlorine leaching step S1 and added as a sulfur source. The chlorine leached residue 13 is then subjected together with the nickel mat 12 to solidification of the univalent copper ions for producing a sulfide such as copper sulfide with the help of sulfur which is a main component of the residue.

The copper sulfide after the solidification is removed as the cementation residue 16 and returned back to the chlorine leaching step S 1.

As described, the nickel sulfide containing copper is received as the material by the chlorine leaching step S1 and after the chlorine leaching step S 1, the chlorine leachate 1 containing copper is subjected to the cementation process. The cementation residue 16 containing copper is then returned back to the chlorine leaching step S1. Accordingly, when the nickel sulfide 10 has been fed continuously into the chlorine leaching step S 1, the amount of copper circulated in the electro-nickel producing process system is certainly increased.

In the cementation step of a conventional electro-nickel producing process, the copper containing nickel chloride solution which is a chlorine leachate produced in the chlorine leaching step is added with the slurry produced by re-pulping the nickel mat together with the nickel chloride solution and with the chlorine leached residue as a sulfur source. The cementation step conducts the reduction of the bivalent copper ions in the copper containing nickel chloride to the univalent copper ions with the help of nickel metals and nickelous sulfide in the material of the nickel mat and then the solidification of the univalent copper ions with the help of sulfur in the chlorine leached residue for production of a copper sulfide.

However, in the chlorine leaching step, the univalent copper ions absorbs a chlorine gas and is oxidized to bivalent copper ions of which the oxidizing power is utilized for leaching of metals from the material while the copper contained in the solution has to be maintained at a higher than the predetermined rate of the concentration. In this way, when the amount of the nickel sulfide to be processed is increased for raising the production of the electro-nickel, the overall amount of liquids in both the chlorine leaching step and the cementation step becomes abundant thus to increase the amount of the copper being circulated in the process system. Accordingly, with the supply of the nickel mat of which the amount is limited, the action of removing the copper ions as copper sulfide in the cementation step will hardly be carried out with efficiency and effectiveness, hence failing to respond to the increase of the amount of the nickel sulfide to be processed for raising the production of the electro-nickel.

For compensation, the electro-nickel producing process of the embodiment allows, as described above, the copper containing nickel chloride solution 11' to be added with the nickel sulfide 10 in the first cementation step S2 for reduction of the bivalent copper ions to the univalent copper ions with the action of the nickel sulfide 10. The resultant produced slurry is then added with the nickel mat 12 and the chlorine leached residue 13 in the second cementation step S3 for solidification of the univalent copper ions with the help of the chlorine leached residue 13 as a sulfur source thus to produce a sulfide such as copper sulfide so that the copper can be removed from the copper containing nickel chloride solution 11'.

As understood, while its bivalent ions are not directly subjected to reduction and solidification with the help of nickel metals and nickelous sulfide contained in the nickel mat 12 and the chlorine leached residue 13, the copper in the form of bivalent ions contained in the copper containing nickel chloride solution 11' is first reduced to a univalent ion form with the best use of the reducing power of the nickel sulfide 10 and then its univalent ions are solidified to a sulfide form with the help of the nickel mat 12 and the chlorine leached residue 13. In this way, the copper circulated in the process system can be processed efficiently with the use of the same amount of the nickel mat as of the conventional process and thus removed certainly from the copper containing nickel chloride solution 11'.

When the copper containing nickel chloride solution 11' is added with the nickel mat in the first cementation step and with the nickel sulfide in the second cementation step, the action of the nickel metals and the nickelous sulfide gives priority to the reduction from the bivalent copper ions to the univalent copper ions and then permits the solidification of the univalent copper ions to produce a copper sulfide. Meanwhile, nickel sulfide in the nickel sulfide material has a power of reducing the bivalent copper ions but is less capable of solidifying the univalent copper ions to a copper sulfide, whereby the removal of copper ions in the second cementation step S3 will hardly be accomplished. Therefore, the process of removing the copper will not be done with the same efficiency as of the conventional process.

Moreover, when the addition of the nickel sulfide material, the nickel mat, and the chlorine leached residue is executed at one time in the cementation step, the action of the nickel metals and the nickelous sulfide in the nickel mat takes priority while disturbing the reducing power of nickel sulfide in the nickel sulfide material, whereby the solidification and removal of copper will be accomplished with less effectiveness.

The temperature for the reaction in the second cementation step S3 may preferably be 70 to 100°C and more preferably 80 to 90°C. When the temperature of condition is not lower than 70°C, the remaining bivalent copper ions can be reduced to the univalent copper ions hence allowing the solidification of the univalent copper ions to be proceeded with sulfur at higher efficiency. Even if the temperature of condition exceeds 100°C, the efficiency of removing the copper from the copper containing nickel chloride solution 11' will rarely be improved more. It is hence preferable in view of the efficiency of the operation that the temperature is not higher than 100°C.

<Liquid Purifying Step>

In the liquid purifying step S4, the impurities other than nickel are removed from the cementation end liquid (the nickel leachate) 14 produced in the second cementation step S3 and the nickel chloride solution for electrolytic sampling is obtained.

The liquid purifying step S4 includes, generally, an iron removing step, a cobalt removing step, a lead removing step, and a zinc removing step. In those sub steps, an oxidation neutralizing process with the use of chlorine gas as an oxidizer and carbonate as an alkali agent may be employed for removing the impurities from the nickel leachate which is the cementation end liquid 14. The oxidation neutralizing process takes advantage of the property of heavy metals including cobalt and iron that an oxidized ion form at high degrees of the heavy metal is easily turned to a hydroxide in a lower range of the pH scale and can thus be utilized widely, for example, in the liquid purifying step of a wet process or in a system of processing a waste water which contains heavy metals.

More specifically, the reaction of removing unwanted impurities is carried out in the liquid purifying step S4 as represented by the following expression (10).

$$2M^{2+}+Cl_2+3NiCO_3+3H_2O \ \square \ 2M(OH)_3+3Ni^{2+}+2Cl^-+3CO_2 \quad ...(10)$$

(where M is either cobalt or iron.)

As shown in the above expression (10), the liquid purifying step S4 involves separating a hydroxide precipitate of target impurities from the nickel leachate with the use of chlorine gas thus to obtain a nickel chloride solution.

In general, the oxidizer to be used in the oxidation neutralizing process may be hypochlorous acid, oxygen, air, or any other appropriate agent than the chlorine gas. Also, the alkali agent to be used may be hydroxide, such as caustic soda, ammonium, or any other appropriate agent than carbonate. Although those agents are favorably used in any combination that conforms to the requirements of the process, they are preferably the chlorine gas as the oxidizer and the carbonate as the alkali agent in the wet process for nickel. The reason why the chlorine gas is used as the oxidizer is that the chlorine gas is produced as a strong oxidizing agent in the plant and can thus be used with much ease. Also, the reason why the carbonate is used as the alkali agent is that the carbonate enables to control the ionic concentration of nickel, sodium, sulfate, and the like and simultaneously, its reactivity during the oxidization neutralizing action is excellent.

<Electrolysis Step>

In the electrolysis step S5, the nickel chloride solution purified in the liquid purifying step S4 is subjected to electrolytic sampling for producing the electro-nickel 15.

More specifically, the reactions are conducted on both the cathode and the anode in the electrolysis step S5 as represented by the following expressions (11) and (12).

(Cathode Side)

$$Ni^{2+} + 2e^- \rightarrow Ni^0 \quad ...(11)$$

(Anode Side)

$$2Cl^- \rightarrow Cl_2 + 2e^- \quad ...(12)$$

More particularly, on the cathode side, nickel ions in the nickel chloride solution are deposited as a metal (the electro-nickel 15) as shown in the expression (11). Also, on the anode side, chlorine ions in the nickel chloride solution are generated as a chlorine gas 18 as shown in the expression (12). The chlorine gas 18 generated is used as a recovered chlorine gas, for example, in the chlorine leaching step S1.

Examples

The embodiment of the present invention will be described in more detail in the form of examples. It is noted that the scope of the present invention is not limited to any of the examples.

<Cementation Step>

The cementation process was carried out with a test apparatus having an effective capacity of 0.5 L, using the following procedure. More particularly, the nickel chloride solution was added with a chlorine leach end liquid which contained 35 g/L at concentration of copper as had been produced by chlorine leaching of a nickel sulfide as the material with the use of a chlorine gas. Then, the cementation process was carried out at a reaction temperature of 90°C for removal of copper by the resultant copper containing nickel chloride solution being mixed so that the nickel sulfide material was 106 g/L, the nickel mat was 32 g/L, and the chlorine leached residue was 10 g/L, as conforming to the following requirements. Table 1 illustrates the quality level of each added material.

[Table 1]

|  | Ni | Co | Fe | Cu | S |
|---|---|---|---|---|---|
| unit: weight % | | | | | |
| Nickel sulfide material | 58-62 | 4.2-4.8 | 0.3-0.7 | 0.01 | 33-37 |
| Nickel mat | 75-80 | 1.0-1.5 | 0.3-0.5 | 0.10-0.15 | 20-25 |
| Chlorine leach residue | 3-10 | 0.5-2.0 | 0.1-0.3 | 0.01-0.15 | 80-90 |

In this example, the nickel sulfide material, the nickel mat, and the chlorine leached residue were added each in the three different conditions (patterns) and the effect of removal of copper was evaluated.

More specifically, the cementation step in Example 1 was carried out in a separate addition pattern (separately added MS ⇒ Ni mat) where the nickel sulfide material (MS) was first added and then, the nickel mat (Ni mat) and the chlorine leached residue were added. As Comparative Example 1, the cementation step was carried out in another separate addition pattern (separately added Ni mat ⇒ MS) where the nickel mat was first added and then, the nickel sulfide material and the chlorine leached residue were added. As Comparative Example 2, the cementation step was carried out in a one-time addition pattern (added at once Ni mat + MS) where the Ni mat, the nickel sulfide material, and the chlorine leached residue were added at one time. In both the separate addition patterns of Example 1 and Comparative Example 1, the two materials were added separately at an interval of two hours after the reaction.

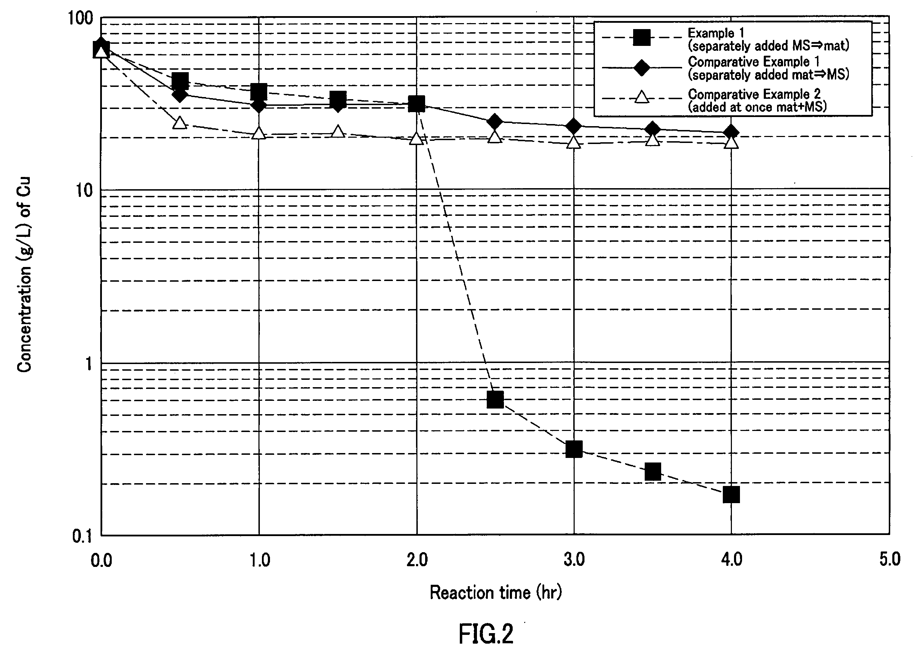

Fig. 2 is a graph showing profiles of variation in the concentration of copper in relation to the cementation reactive time at different material addition patterns.

As shown in the graph of Fig. 2, the profile of Example 1, where the nickel sulfide material was added for the reaction in the first cementation step and then, the nickel mat and the chlorine leached residue were added in the second cementation step, represents that the removal of copper from the copper containing nickel chloride solution was accomplished to a resultant rate of not greater than 0.2 g/L after the reaction time of four hours.

On the contrary, in Comparative Example 1 where the nickel mat was first added for the reaction and then, the nickel sulfide material and the chlorine leached residue were added and Comparative Example 2 where the nickel mat, the nickel sulfide material, and the chlorine leached residue were added at one time, the remaining of copper was measured as much as 20 g/L after the reaction time of four hours.

It was found from the foregoing results that, when the nickel sulfide material was added for the reaction in the first cementation step and then, the nickel mat and the chlorine leached residue were added in the second cementation step, the copper contained in the copper containing nickel chloride solution was solidified and removed out with efficiency.

<Reactive Temperature in First Cementation Step>

As, under the same conditions as of Example 1 described above, the nickel sulfide material had been mixed and reacted for two hours in the first cementation step and then, added with the nickel mat and the chlorine leached residue for reaction in the second cementation step, the effect of the removal of copper in relation to the reactive temperature in the first cementation step was examined. More particularly, the effect of the removal of copper was examined when the reactive temperature in the first cementation step was 70°C, 80°C, 90°C, and 100 °C separately.

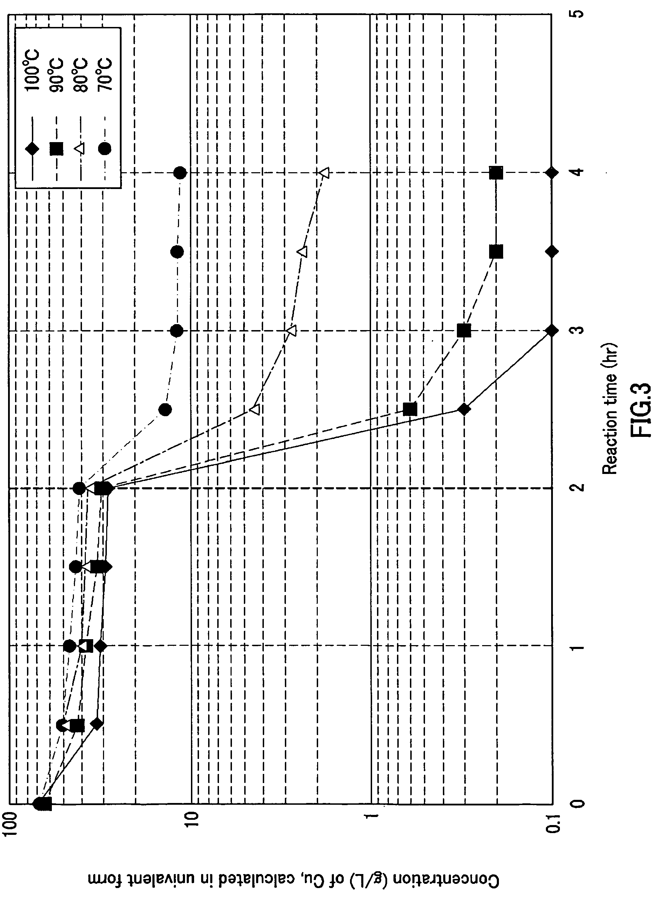

Fig. 3 is a graph showing profiles of variation in the concentration (g/L) of copper (calculated in univalent form) in relation to the reactive time at different degrees of the reactive temperature.

As apparent from Fig. 3, it was found that, when the reactive temperature in the first cementation step was not lower than 80°C, the concentration of copper at the end of the reaction (of two hours) in the first cementation step stayed smaller than 40 g/L.

In particular, when the reactive temperature was 90°C or 100°C, the concentration of copper at the end of the reaction in the first cementation step dropped down to 30 g/L or smaller. It was found that, when the reactive temperature in the first cementation step exceeded 90°C, the removal of copper from the copper containing nickel chloride solution after the second cementation step became more efficient.

On the other hand, when the reactive temperature in the first cementation step was 70°C, the concentration of copper at the end of the reaction (of two hours) in the first cementation step was as great as about 40 g/L and the capability of removal of copper was declined.

It was proved from the foregoing results that, when the reactive temperature in the first cementation step was in a range of 80 to 100°C and preferably 90 to 100 °C, the effect of the removal of copper became high and the removal of copper was conducted with high efficiency.

<Concentration of Copper in Reaction Start Liquid in Second Cementation Step>

The effect of the removal of copper in relation to the reactive temperature in the second cementation step was examined with the addition of both the nickel mat and the chlorine leached residue. More specifically, after the execution of the first cementation step under the same conditions as of Example 1 described above, the second cementation step was carried out with the reactive temperature set to 80°C, 90°C, and 95°C respectively.

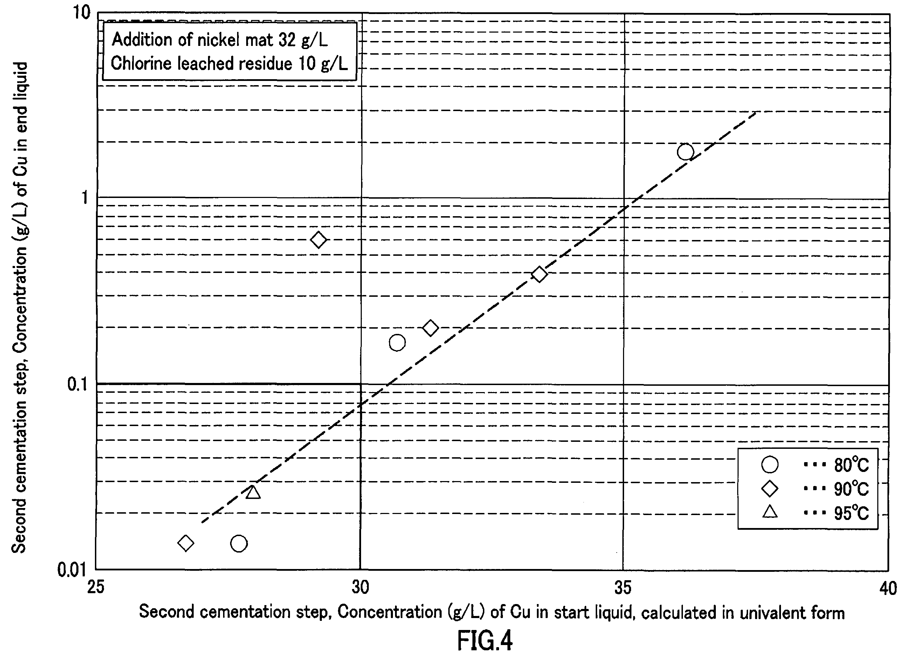

Fig. 4 is a graph showing a profile of variation in the concentration (g/L) of copper (univalent copper) of the end liquid at the end of the reaction in relation to the concentration (g/L) of copper of the start liquid at the start of the reaction in the second cementation step.

As apparent from Fig. 4, it was found that the removal of copper was conducted with high efficiency with the profile for the effect of the removal of copper extending linearly at either the reactive temperature of 80°C, 90°C, or 95 °C.

It was also found from the result of the experiment that, when the concentration of copper in the reaction start liquid in the second cementation step, i.e. the concentration of copper in the reaction end liquid in the first cementation step, was not greater than 30 g/L for the univalent copper, the concentration of copper in the reaction end liquid after the second cementation step dropped down to 0.1 g/L or smaller. More particularly, it was found that, when the concentration of copper in the copper containing nickel chloride solution in the first cementation step was declined to not greater than 30 g/L, the concentration of copper after the second cementation step efficiently dropped down 0.1 g/L or smaller.

<Change in Concentration of Copper through Steps>

Referring to the aspect obtained from the foregoing results, a change in the concentration of copper in both the first cementation step and the second cementation step respectively was examined. Using the same manner as of Example 1, a copper containing nickel chloride solution was produced in the chlorine leaching step and added with 106 g/L of the nickel sulfide material at a reactive temperature of 95°C in the first cementation step. Then, the slurry produced in the first cementation step was added with 32 g/L of the nickel mat and 10 g/L of the chlorine leached residue at a reactive temperature of 80°C in the second cementation step. When the first cementation step had been conducted for two hours, the second cementation step started.

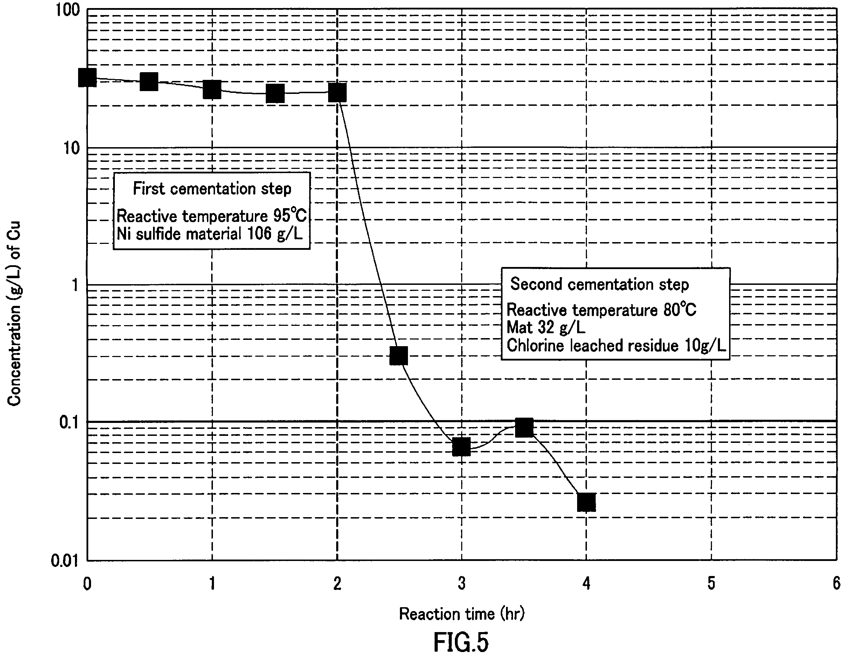

Fig. 5 is a graph showing a change in the concentration (g/L) of copper in relation to the reactive time.

As apparent from Fig. 5, it was found that, when the process was carried out so that the concentration of copper at the end of the reaction in the first cementation step stayed not greater than 30 g/L, the concentration of copper at the end of the reaction in the second cementation step dropped down to a very small level of not greater than 0.1 g/L and the removal and solidification of copper was conducted with higher efficiency.

<Particle diameter of Nickel Sulfide Material>

Next, the diameter of particles of the nickel sulfide material to be added in the first cementation step was examined. More specifically, a copper containing nickel chloride solution was produced in the chlorine leaching step using the same manner as of Example 1 and added with a nickel sulfide of which the average particle diameter (D50%) ranged 1.5 to 40 $\mu$m in the first cementation step. The concentration of copper (calculated in univalent form) in the reaction end liquid after the first cementation step was then measured.

The measurement was made with 80°C and 90°C of the reactive temperature respectively in the first cementation step. Also with 80°C of the reactive temperature, the nickel sulfide was added, 63.4 g/L and 106 g/L respectively, to the copper containing nickel chloride solution for the measurement. With 95°C of the reactive temperature, 106 g/L of the nickel sulfide was added to the copper containing nickel chloride solution for the measurement.

In the first cementation step, the reaction time was two hours while the reaction start liquid was used with the concentration of copper being 32 g/L (68 % of bivalent copper). The nickel sulfide material was ground by a tower mill (KW-20, a model of Nippon Eirich) and its particle diameter was measured by a particle distribution micro-track measuring machine (9320-X100 HRA, a model of Nikkiso).

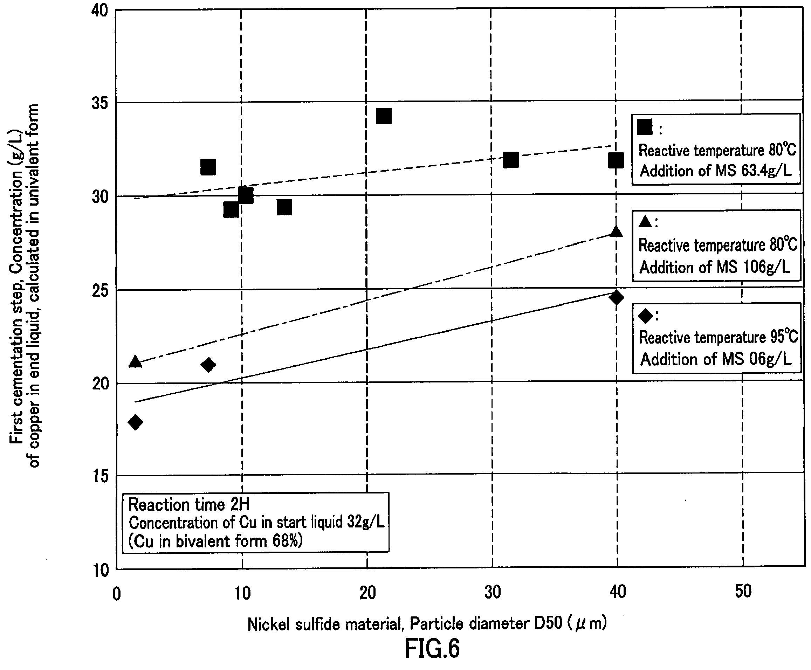

Fig. 6 is a graph showing profiles of the concentration (g/L) of copper (calculated in univalent form) in the reaction end liquid after the first cementation step in relation to the average particle diameter (D50) ($\mu$m) of the nickel sulfide material.

As apparent from Fig. 6, it was found that the concentration of copper in the reaction end liquid dropped down as the average particle diameter of the nickel sulfide material became smaller.

As understood from the result shown in Fig. 4, it was desired for having not greater than 0.1 g/L of the concentration of copper in the reaction end liquid after the second cementation step to hold the concentration of copper at not greater than 30 g/L in the reaction end liquid after the first cementation step. In this respect, as shown in Fig. 6, it was proved that, when 106 g/L of the nickel sulfide material had been added and processed at a reactive temperature of 80°C or higher, particularly with the average particle diameter (D50%) of the nickel sulfide material being set to not greater than 40 $\mu$m, the concentration of copper in the reaction end liquid dropped down to not greater than 30 g/L.

It was also proved that, when 63.4 g/L of the nickel sulfide material had been added and processed at a reactive temperature of 80°C, the average particle diameter (D50) of the nickel sulfide material was desired to set with not greater than 20 $\mu$m and preferably not greater than 10 $\mu$m for having not greater than 30 g/L of the concentration of copper in the reaction end liquid.

**Claims**

1.  A copper ion removing method of removing copper ions from a copper containing nickel chloride solution which has been produced by chlorine leaching a nickel sulfide, the method comprising:

    a first step of adding a nickel sulfide to the copper containing nickel chloride solution for reduction of, at least, bivalent copper ions in the copper containing nickel chloride solution to univalent copper ions; and
    a second step of adding a nickel mat and a residue produced by the chlorine leaching to a slurry produced by the first step to solidify of the univalent copper ions in the slurry as a sulfide.

2.  The method of claim 1,wherein the residue produced by the chlorine leaching is used as a sulfur source to solidify the univalent copper ions as a sulfide with the sulfur source.

3.  The method of claim 1 or 2,wherein the nickel sulfide is produced by a wet smelting of nickel oxide ores and contains nickel and cobalt.

4. The method of any of claims 1 to 3, wherein the first step is performed at the temperature ranging from 80 to 110°C.

5. The method of any of claims 1 to 4, wherein the nickel sulfide to be added in the first step is prepared by wet grinding so that the average particle diameter (D50) is not greater than 80 $\mu$m.

6. The method for a copper containing nickel chloride solution according to any of claims 1 to 5, wherein the concentration of copper in the copper containing nickel chloride solution after the reaction in the first step is not greater than 30 g/L in univalent ion form.

7. The method of claim 6, wherein the reactive temperature in the first step is performed at the temperature ranging from 90 to 100°C.

8. The method of claim 6 or 7, wherein the nickel sulfide to be added in the first step is prepared by wet grinding so that the average particle diameter (D50) is not greater than 20 $\mu$m.

9. The method of any of claims 1 to 8, wherein the reactive temperature in the second step is performed at the temperature ranging from 70 to 100 °C.

10. An electro-nickel producing method of producing an electro-nickel through electrolytic sampling where amounts of copper have been removed from a copper containing nickel chloride solution produced by chlorine leaching a nickel sulfide, the method comprising:

a first cementation step of adding a nickel sulfide to the copper containing nickel chloride solution for reduction of, at least, bivalent copper ions in the copper containing nickel chloride solution to univalent copper ions; and a second cementation step of adding a nickel mat and a residue produced by the chlorine leaching to a slurry produced by the first cementation step for solidification of the univalent copper ions in the slurry to form a sulfide.


**Patentansprüche**

1. Kupferionenentfernungsverfahren zur Entfernung von Kupferionen aus einer kupferhaltigen Nickelchloridlösung, welche durch Chlorauslaugung eines Nickelsulfids hergestellt worden ist, wobei das Verfahren umfasst:

einen ersten Schritt des Hinzufügens eines Nickelsulfids zu der kupferhaltigen Nickelchloridlösung zum Reduzieren von, mindestens zweiwertigen Kupferionen in der kupferhaltigen Nickelchloridlösung zu einwertigen Kupferionen; und einen zweiten Schritt des Hinzufügens eines Nickelrohsteins und eines Rückstandes, hergestellt durch die Chlorauslaugung, zu einer Aufschlämmung, hergestellt durch den ersten Schritt, um die einwertigen Kupferionen in der Aufschlämmung als ein Sulfid zu verfestigen.

2. Verfahren nach Anspruch 1, wobei der Rückstand, hergestellt durch die Chlorauslaugung, als eine Schwefelquelle verwendet wird, um die einwertigen Kupferionen mit der Schwefelquelle als ein Sulfid zu verfestigen.

3. Verfahren nach Anspruch 1 oder 2, wobei das Nickelsulfid durch ein Nassschmelzen von Nickeloxiderzen hergestellt wird und Nickel und Kobalt enthält.

4. Verfahren nach einem der Ansprüche 1 bis 3, wobei der erste Schritt bei der Temperatur im Bereich von 80 bis 110 °C ausgeführt wird.

5. Verfahren nach einem der Ansprüche 1 bis 4, wobei das in dem ersten Schritt hinzuzufügende Nickelsulfid durch Nassmahlen hergestellt wird, so dass der gemittelte Teilchendurchmesser (D50) nicht größer als 80 $\mu$m ist.

6. Verfahren für eine kupferhaltige Nickelchloridlösung nach einem der Ansprüche 1 bis 5, wobei die Konzentration des Kupfers in der kupferhaltigen Nickelchloridlösung nach der Umsetzung in dem ersten Schritt nicht größer als 30 g/L in Form einwertiger Ionen ist.

7. Verfahren nach Anspruch 6, wobei die Reaktionstemperatur in dem ersten Schritt eine Temperatur im Bereich von 90 bis 100 °C ist.

**8.** Verfahren nach Anspruch 6 oder 7, wobei das in dem ersten Schritt hinzuzufügende Nickelsulfid durch Nassmahlen hergestellt wird, so dass der gemittelte Teilchendurchmesser (D50) nicht größer als 20 $\mu$m ist.

**9.** Verfahren nach einem der Ansprüche 1 bis 8, wobei die Reaktionstemperatur in dem zweiten Schritt eine Temperatur im Bereich von 70 bis 100 °C ist.

**10.** Elektronickelherstellungsverfahren zur Herstellung eines Elektronickels durch elektrolytische Probenahme, in dem Mengen von Kupfer aus einer kupferhaltigen Nickelchloridlösung, hergestellt durch Chlorauslaugung eines Nickelsulfids, entfernt worden sind, wobei das Verfahren umfasst:

einen ersten Zementationsschritt des Hinzufügens eines Nickelsulfids zu der kupferhaltigen Nickelchloridlösung zum Reduzieren von, mindestens zweiwertigen Kupferionen in der kupferhaltigen Nickelchloridlösung zu einwertigen Kupferionen; und
einen zweiten Zementationsschritt des Hinzufügens eines Nickelrohsteins und eines Rückstandes, hergestellt durch die Chlorauslaugung, zu einer Aufschlämmung, hergestellt durch den ersten Zementationsschritt, zur Verfestigung der einwertigen Kupferionen in der Aufschlämmung, um ein Sulfid zu bilden.

**Revendications**

**1.** Un procédé d'élimination d'ions de cuivre éliminant les ions de cuivre d'une solution de chlorure de nickel contenant du cuivre produite en lixiviant au chlore un sulfure de nickel, le procédé comprenant les étapes suivantes:

une première étape d'addition d'un sulfure de nickel à la solution de chlorure de nickel contenant du cuivre pour réduire au moins des ions de cuivre bivalents dans la solution de chlorure de nickel contenant du cuivre pour en obtenir des ions de cuivre monovalents; et
une deuxième étape d'addition du nickel et d'un résidu produit par la lixiviation au chlore à une suspension produite par la première étape pour solidifier les ions de cuivre monovalents dans la suspension sous forme d'un sulfure.

**2.** Le procédé selon la revendication 1, dans lequel le résidu produit par la lixiviation au chlore est utilisé comme une source de soufre pour solidifier les ions de cuivre monovalents sous forme d'un sulfure avec la source de soufre.

**3.** Le procédé selon la revendication 1 ou 2, dans lequel le sulfure de nickel est produit par fonte des minerais d'oxyde de nickel et contient du nickel et du cobalt.

**4.** Le procédé selon l'une quelconque des revendications 1 à 3, dans lequel la première étape s'effectue à une température allant de 80 à 110°C.

**5.** Le procédé selon l'une quelconque des revendications 1 à 4, dans lequel le sulfure de nickel à ajouter à la première étape est préparé par broyage au mouillé de sorte que le diamètre de particule moyen (D50) ne dépasse pas 80 $\mu$m.

**6.** Le procédé pour une solution de chlorure de nickel contenant du cuivre selon l'une quelconque des revendications 1 à 5, dans lequel la concentration de cuivre dans la solution de chlorure de nickel contenant du cuivre après la réaction de la première étape ne dépasse pas 30 g/L sous forme d'ions monovalents.

**7.** Le procédé selon la revendication 6, dans lequel la température réactionnelle à la première étape est une température allant de 90 à 100°C.

**8.** Le procédé selon la revendication 6 ou 7, dans lequel le sulfure de nickel à ajouter à la première étape est préparé par broyage au mouillé de sorte que le diamètre de particule moyen (D50) ne dépasse pas 20 $\mu$m.

**9.** Le procédé selon l'une quelconque des revendications 1 à 8, dans lequel la température réactionnelle à la deuxième étape est une température allant de 70 à 100°C.

**10.** Un procédé de production de nickel électrolytique produisant un nickel électrolytique par échantillonnage électrolytique dans lequel des quantités de cuivre ont été éliminées d'une solution de chlorure de nickel contenant du cuivre produite par lixiviation au chlore d'un sulfure de nickel, le procédé comprenant:

13

une première étape de cémentation d'ajout d'un sulfure de nickel à la solution de chlorure de nickel contenant du cuivre pour réduire au moins des ions de cuivre bivalents dans la solution de chlorure de nickel contenant du cuivre pour en obtenir des ions de cuivre monovalents; et

une deuxième étape de cémentation d'ajout du nickel et d'un résidu produit par la lixiviation au chlore à une suspension produite par la première étape de cémentation pour solidifier des ions de cuivre monovalents dans la suspension pour former un sulfure.

Nickel sulfide 10          Nickel mat 12

⟨ Grinding ⟩

⟨ Re-pulping ⟩          ⟨ Re-pulping ⟩

First cementation step —S2

Chlorine leachate 11

( Copper containing nickel chloride solution 11′ )

Chlorine leached residue 13

S1

Second cementation step —S3

Chlorine leaching step

Cementation end liquid 14    Cementation residue 16

Chlorine leached residue 13

Nickel chloride solution 17

Liquid purifying step —S4

⟨ Recovery of sulfur ⟩

Electrolysis step —S5

Product of sulfur

Chlorine gas 18

Electro-nickel 15

FIG.1

FIG.2

Reaction time (hr)

Concentration (g/L) of Cu

Example 1
(separately added MS⇒mat)

Comparative Example 1
(separately added mat⇒MS)

Comparative Example 2
(added at once mat+MS)

FIG.3

FIG.4

FIG.5

EP 2 584 055 B1

FIG.6

FIG.7

EP 2 584 055 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11080986 A